# EUROPÄISCHE PATENTANMELDUNG

(11) **EP 3 070 278 A2**
(43) Veröffentlichungstag der Anmeldung: **21.09.2016**
(21) Anmeldenummer: 16156672.4
(22) Anmeldetag: 22.02.2016
(51) Int. Cl.: F01D 25/24, F02C 7/05, F01D 21/04

(54) **SCHUTZEINRICHTUNG FÜR EINE STRÖMUNGSMASCHINE**

(30) Priorität: 18.03.2015 DE 102015204893
(71) Anmelder: MTU Aero Engines AG, 80995 München (DE)
(72) Erfinder: Stiehler, Frank, 04924 Bad Liebenwerda (DE); Schellhorn, Lars, 07318 Saalfeld (DE)

(57) **Zusammenfassung**

Ein erster Aspekt der Erfindung betrifft eine Schutzeimichtung (10) für eine Strömungsmaschine, insbesondere eine Gasturbine, mit einem Sicherungsring (12), welcher radial innenseitig an einem Gehäuseelement (14) der Strömungsmaschine angeordnet ist und welcher ein Durchdringen des Gehäuseelements (14) durch ein Teil eines Bauteils der Strömungsmaschine bei einem strukturellen Versagen dieses Bauteils wenigstens überwiegend verhindert, wobei der Sicherungsring (12) wenigstens in Umfangsrichtung aus einer Vielzahl von Ringsegmenten (16) besteht, welche formschlüssig miteinander verbunden sind. Ein zweiter Aspekt der Erfindung betrifft ein Flugtriebwerk.

## Beschreibung

Die Erfindung betrifft eine Schutzeinrichtung für eine Strömungsmaschine gemäß dem Oberbegriff des Anspruchs 1. Die Erfindung betrifft weiterhin ein Flugtriebwerk.

Aufgrund von insbesondere thermischen und/oder mechanischen Belastungen können im Betrieb einer Strömungsmaschine einzelne Bauteile strukturell versagen. So kann beispielsweise eine Laufschaufel eines Laufschaufehings während des Betriebs der Strömungsmaschine zerbrechen. Aufgrund der hohen Umfangsgeschwindigkeit der Laufschaufel, hervorgerufen durch die Rotation des Laufschaufelrings, kann ein so abgebrochenes Teil radial ein Gehäuseelement der Strömungsmaschine durchdringen und aus dieser herausgeschleudert werden. Dabei kann die Strömungsmaschine weiter beschädigt werden. Insbesondere können aber auch Schäden in der Umgebung der Strömungsmaschine hervorgerufen werden. Ist die Strömungsmaschine beispielsweise eine Gasturbine eines Flugtriebwerks, kann ein radial herausgeschleudertes Teil die Passagiere des Flugzeugs verletzten und/oder das Flugzeug selbst beschädigen. Dabei können auch für die Flugtauglichkeit kritische Systeme des Flugzeugs in Mitleidenschaft gezogen werden. Beispielsweise können Hydraulikleitungen des Flugzeugs so beschädigt werden, dass die Steuerflächen des Flugzeugs nur noch eingeschränkt kontrollierbar sind.

Um ein radiales Durchdringen eines Gehäuseelements der Strömungsmaschine durch ein Teil eines Bauteils der Strömungsmaschine bei einem strukturellen Versagen dieses Bauteils wenigstens überwiegend zu verhindern, werden an Strömungsmaschinen, insbesondere an Gasturbinen, Schutzeinrichtungen mit einem Sicherungsring vorgesehen, welcher radial innenseitig an einem Gehäuseelement der Strömungsmaschine angeordnet ist. Der Sicherungsring soll verhindern, dass ein abgebrochenes Teil eines Bauteils radial aus der Strömungsmaschine geschleudert wird.

Beispielsweise aus EP 1 918 531 A2 ist ein solcher Sicherungsring für das Fangehäuse eines Gasturbinentriebwerks bekannt. Der Sicherungsring besteht dabei aus einem einstückigen Faserverbundring mit einer zu Fanschaufeln des Gasturbinentriebwerks weisenden Innenfläche angeordneten, vorzugsweise aus einzelnen, in ein duktiles Material eingebetteten Platten gebildeten keramischen Abdeckung. Diese keramische Abdeckung bildet bei einem Aufprall von abgetrennten Schaufelteilen entsprechend der Anordnung der versinnterten Ausgangskeramikpartikel ein Rissnetzwerk und zerfällt dann in kleine Teile. Dabei nimmt die keramische Abdeckung einen großen Teil der kinetischen Energie des aufprallenden Schaufelteils auf. Folgeschäden am Sicherungsring sollen dadurch minimiert werden.

Nachteilig an diesem Sicherungsring ist, dass er besonders kostenintensiv zu fertigen und zu montieren ist. Der einstückige Faserverbundring und die keramische Abdeckung müssen getrennt in einem aufwändigen Prozess hergestellt werden und anschließend noch bei der Montage zusammengefügt werden. Ein einstückiger Faserverbundring wird durch die Ausdehnung infolge von thermischen Belastungen stark strukturell belastet. Dadurch kann die Schutzwirkung des Sicherungsrings eingeschränkt sein. Zudem kann deswegen ein einstückiger Faserverbundring nur bei begrenzten großen Strömungsmaschinen eingesetzt werden.

Der Vollständigkeit halber sei zudem auch noch auf die nachveröffentlichte Druckschrift EP 2 876 262 A1, welche ein Containment-System für einen Fan eines Flugtriebwerks betrifft, und die beiden Druckschriften DE 699 08 540 T2 und US 5 336 044A, die ebenfalls Containment-Systeme betreffen, hingewiesen.

Aufgabe der vorliegenden Erfindung ist es, eine Schutzeinrichtung für eine Strömungsmaschine und ein Flugtriebwerk zu schaffen, welche besonders kostengünstig zu fertigen und zu montieren sind.

Diese Aufgabe wird erfindungsgemäß durch eine Schutzeinrichtung mit den Merkmalen des Anspruchs 1 gelöst. Zudem wird diese Aufgabe durch ein Flugtriebwerk mit den Merkmalen des Anspruchs 15 gelöst. Vorteilhafte Ausgestaltungen mit zweckmäßigen Weiterbildungen der Erfindung sind in den jeweiligen Unteransprüchen angegeben, wobei vorteilhafte Ausgestaltungen der Schutzeinrichtung als vorteilhafte Ausgestaltungen des Flugtriebwerks und umgekehrt anzusehen sind.

Ein erster Aspekt der Erfindung betrifft eine Schutzeinrichtung für eine Strömungsmaschine, insbesondere eine Gasturbine, mit einem Sicherungsring, welcher radial innenseitig an einem Gehäuseelement der Strömungsmaschine angeordnet ist und welcher ein Durchdringen des Gehäuseelements durch ein Teil eines Bauteils der Strömungsmaschine bei einem strukturellen Versagen dieses Bauteils wenigstens überwiegend verhindert. Erfindungsgemäß ist es dabei vorgesehen, dass der Sicherungsring wenigstens in Umfangsrichtung aus einer Vielzahl von Ringsegmenten besteht, welche formschlüssig miteinander verbunden sind. Durch den mehrteiligen Sicherungsring ist eine leichte Montage auch bei hinterschnittenen Gehäusegeometrien besonders einfach möglich. Dort ist ein Einsatz von bekannten einstückigen Sicherungsringen nicht oder nur mit hohem Aufwand möglich. Durch den Formschluss sind die Ringsegmente miteinander gekoppelt. Damit ist eine vollständige Containmentfunktion möglich, da so auch die Aufnahme von Zuglasten im Containmentfall möglich ist. Das strukturelle Versagen von Bauteilen und damit einhergehend das wenigstens überwiegende Verhindern von radialem Austreten von Teilen wird dabei als Containmentfall bezeichnet. Der Formschluss sollte dabei so ausgelegt sein, dass ein einzelnes Ringsegment bei einem Containmentfall nicht oder nur unwesentlich durch das auf das Ringsegment einschlagende Teil aus dem Sicherungsring herausgedrückt wird. Die Haltekraft des Formschlusses und/oder die Struktur des Formschlusses kann dafür so ausgelegt werden, dass die Haltekraft und/oder die strukturelle Integrität größer ist als die anzunehmende Kraft, welche ein einschlagendes Teil auf den Sicherungsring ausübt. Dabei ist es möglich, dass die einzelnen Ringsegmente mit ihren in Umfangsrichtung nebeneinander angeordneten Stirnflächen für einen Formschluss lediglich kontaktiert werden. Der Sicherungsring hält dann insofern formschlüssig zusammen, als dass sich die einzelnen Ringsegmente bei einer radialen wirkenden Kraft an den miteinander kontaktierten Stirnflächen aneinander verkanten.

Vorzugsweise werden bzw. sind die einzelnen Ringsegmente des Sicherungsrings derart radial innenseitig an dem Gehäuseelement angeordnet, dass sie in einem Normalbetriebszustand, d.h. einem Betriebszustand ohne Containment-Fall, ihre angedachte Soll-Position nicht verlassen können. Insbesondere soll keines der Ringsegmente aus dem im Wesentlichen kreisförmigen Sicherungsring herausfallen können. Dies kann zum Beispiel erreicht werden, indem die den Sicherungsring bildenden Ringsegmente radial außen von dem Gehäuseelement, welches sie schützen sollen, begrenzt werden, in Axialrichtung von einer weiter unten noch näher beschriebenen Spanneinrichtung begrenzt werden und radial innen von einer Deckelstruktur, z.B. aus Blech, wie etwa ein so genannter Liner, begrenzt werden. Die radial innen angeordnete Deckelstruktur kann ein "Herausfallen" von Ringsegmenten nach radial innen verhindern. Ferner kann die Deckelstruktur dazu beitragen, der Einschlagskraft im Containment-Fall auf die Ringsegmente besser zu verteilen.

Die Achse der Strömungsmaschine und damit auch die dazu raumorthogonal ausgerichtete radiale Richtung wird beispielsweise durch die Drehachse einer mittleren Welle der Strömungsmaschine definiert. Die einzelnen Ringsegmente bestehen vorzugsweise aus einem hochfesten Material. Die Ringsegmente verteilen im Falle eines strukturellen Versagens des Bauteils die kinetische Energie des auf sie einschlagenden Teils auf eine große Fläche. Dadurch wird zunächst ein Durchschlagen des radial von diesem Ringsegment außen liegenden Gehäuseelements verhindert. Der Sicherungsring, bestehend aus der Vielzahl von Ringsegmenten, ist dabei besonders kostengünstig zu fertigen und zu montieren, insbesondere kostengünstiger als ein einstückiger Sicherungsring.

Die Strömungsmaschine kann beispielsweise einen Schaufehing umfassen, insbesondere einen Laufschaufelring und/oder einen Leitschaufehing. Die Schutzeinrichtung mit dem Sicherungsring verhindert wenigstens überwiegend ein Austreten von Schaufehingteilen der Strömungsmaschine in radialer Richtung aus einem Gehäuse der Strömungsmaschine. Der Sicherungsring kann sich dabei axial so weit wie ein Schaufelring erstrecken. Der Sicherungsring kann sich aber auch axial über den Schaufelring hinaus erstrecken, insbesondere auch über jeweilige Statoren der Strömungsmaschine. Damit wird die Schutzwirkung der Sicherungseinrichtung besonders erhöht. Möglich ist auch die Anordnung mehrerer Sicherungsringe axial nebeneinander. Denkbar ist auch, dass sich ein Sicherungsring über die gesamte Länge des Gehäuses der Strömungsmaschine erstreckt. Durch eine besonders große Erstreckung des Sicherungsrings und/oder durch die Anordnung mehrerer Sicherungsringe nebeneinander kann ein besonders großer Bereich der Strömungsmaschine vor einem Durchdringen eines abgebrochenen Teils bei einem strukturellen Versagen eines Bauteils geschützt werden.

Eine weitere Gefahr bei einem strukturellen Versagen von einem Bauteil einer Strömungsmaschine ist, dass ein von diesem Bauteil abgebrochenes Teil in dem Gehäuse der Strömungsmaschine und/oder dem Sicherungsring steckenbleibt. Dabei kann das Teil beispielsweise in einen Innenraum der Strömungsmaschine so hineinragen, dass weitere Laufschaufeln eines Laufschaufelrings gegen das in den Innenraum hineinragende Teil schlagen. Dadurch können weitere Teile abgeschlagen werden, welche nun ebenfalls drohen aus dem Gehäuse der Strömungsmaschine radial herausgeschleudert zu werden. Dies führt zu einer erheblich höheren strukturellen Belastung der Strömungsmaschine und/oder zu einer wesentlich erhöhten Gefahr des radialen Austretens von Teilen aus der Strömungsmaschine. Ein Ringsegment der erfindungsgemäßen Schutzreinrichtung kann daher in vorteilhafter Weise so gestaltet sein, dass es sich bei einem Aufprall eines abgebrochenen Teils der Strömungsmaschine so weit verformen kann, dass kein in dem Ringsegment steckendes Teil mehr in den Innenraum der Strömungsmaschine ragen kann. Weitere Beschädigungen des Innenraums durch das abgebrochene Teil werden damit verhindert. Eine solche Verformung kann insbesondere lokal begrenzt und/oder als Wölbung ausgebildet sein. Zudem besteht die Möglichkeit, dass eine in Folge eines Einschlags des abgebrochenen Teils entstehende Materialausbuchtung eines Ringsegments eine in dem radial außen liegenden Gehäuseelement entstehende Öffnung abdichtet.

In einer weiteren vorteilhaften Ausgestaltung der erfindungsgemäßen Schutzeinrichtung ist es vorgesehen, dass zwischen den einzelnen Ringsegmenten in Umfangsrichtung ein Spiel ausgebildet ist, um infolge von thermischen Belastungen hervorgerufene Ausdehnungen der Ringsegmente ausgleichen zu können. Insbesondere kann durch das Spiel auch eine unterschiedliche Wärmeausdehnung des Gehäuseelements im Vergleich zu dem Sicherungsring ausgeglichen werden. Durch Verbrennungsprozesse können in dem Innenraum einer Strömungsmaschine besonders hohe Temperaturen entstehen. Diese rufen eine besonders hohe thermische Belastung des Sicherungsrings hervor und bewirken damit auch eine Ausdehnung. Das Spiel ist dabei allerdings möglichst gering zu wählen. Beispielsweise sollten die Ringsegmente in Noimalstellung und bei üblichen thermischen Belastungen weiterhin aneinanderstoßen. Es sollte also auch bei besonders geringen Temperaturen - beispielsweise wenn die Strömungsmaschine nicht im Betrieb ist - kein Blickspalt vorhanden sein. Das Spiel muss sorgfältig nach der zu erwartenden Innentemperatur beim Betrieb der Strömungsmaschine und dem Dehnungskoeffizienten des Werkstoffs der Ringsegmente ausgelegt werden. Dabei kann auch ein Dehnungskoeffizient des Werkstoffs des Gehäuseelements und dessen erwartete Temperatur während des Betriebs der Strömungsmaschine beachtet werden. Insbesondere sollte das Spiel kleiner sein als die zu erwartenden Bruchteile beim strukturellen Versagen eines Bauteils. Beispielsweise sollte das Spiel kleiner als jeweilige Spitzen von Schaufeln des Schaufelrings sein. Dadurch wird vorteilhafter Weise verhindert, das Teile in den Spalt zwischen zwei Ringsegmenten stoßen und sich dort verklemmen und/oder den Sicherungsring und anschließend das Gehäuse der Strömungsmaschine durchschlagen. Bei mehreren Reihen von Ringsegmenten nebeneinander kann ein entsprechendes Spiel in vorteilhafter Weise auch zwischen diesen Reihen in axialer Richtung vorgesehen werden.

In weiterer vorteilhafter Ausgestaltung der erfindungsgemäßen Schutzeinrichtung ist es vorgesehen, dass die Ringsegmente formschlüssig durch eine Verklinkung und/oder eine Verzahnung miteinander verbunden sind. Durch die Verklinkung und/oder die Verzahnung sind einzelne Ringsegmente mit anderen Ringsegmenten so verbunden, dass die Kraft eines einschlagenden Teils auf mehrere Ringsegmente und damit eine besonders große Fläche verteilt werden kann. Dadurch ist die Schutzwirkung des Sicherungsrings besonders erhöht. Zudem ist der Sicherungsring so besonders einfach zu montieren. Außerdem können durch eine Verklinkung und/oder eine Verzahnung besonders zuverlässig verhindert werden, dass einzelne Ringsegmente durch ein einschlagendes Teil aus dem Sicherungsring gedrückt werden. Dadurch wird die Schutzwirkung des Sicherungsrings ebenfalls besonders erhöht.

In einer weiteren vorteilhaften Ausgestaltung der erfindungsgemäßen Schutzeinrichtung ist es vorgesehen, dass der Sicherungsring mittels einer Spanneinrichtung in axialer Richtung eingespannt ist. Dadurch kann der Sicherungsring in besonders einfacher Art und Weise in seiner Position fixiert werden. Durch eine erhebliche Wandreibung bei einer Spannvorrichtung - welche auch als Einspannvorrichtung bezeichnet wird - werden durch Kraftumlenkung zudem die Zugkräfte in den Ringsegmenten kleiner als in einem äquivalenten einstückigen Schutzring. Gleichzeitig ist es so besonders einfach möglich, eine vorbestimmte Haltekraft einzustellen, mit welcher ein einzelnes Ringsegment in seiner Position gehalten wird. Insbesondere lässt sich mittels der Spanneinrichtung die Festigkeit einer Verklinkung und/oder einer Verzahnung einstellen. Dadurch kann der Schutzring mit der Vielzahl von Ringsegmenten weitestgehend die Eigenschaften eines geschlossenen Schutzrings erhalten.

In weiterer vorteilhafter Ausgestaltung der erfindungsgemäßen Schutzeinrichtung ist es vorgesehen, dass die Spanneinrichtung wenigstens einen Stator, insbesondere einen Schaufelfuß einer Leitschaufel, einen Gehäusevorsprung, einen Haken und/oder ein Leitblech umfasst, welcher wenigstens teilweise axial an dem Sicherungsring anliegt. Damit können bereits vorhandene Komponenten der Strömungsmaschine als Teil der Spanneinrichtung genutzt werden. Dadurch kann die Spanneinrichtung besonders kostengünstig hergestellt werden. Zudem kann so der Bauraumbedarf der Schutzeinrichtung besonders klein gehalten werden.

In einer weiteren vorteilhaften Ausgestaltung der erfindungsgemäßen Schutzeinrichtung ist es vorgesehen, dass der Sicherungsring wenigstens zwei Reihen von Ringsegmenten aufweist, wobei zumindest die in axialer Richtung aneinandergrenzenden Seitenflächen der Ringsegmente durch eine Verklinkung, Verzahnung und/oder einen Versatz in Umfangsrichtung miteinander verbunden sind. Einerseits wird dadurch eine Rotation der wenigstens zwei Reihen zueinander verhindert. Andererseits entsteht durch diese erfindungsgemäße Konstruktion eine Selbsthemmung der zwei Reihen zueinander, insbesondere eine formschlüssige Selbsthemmung. Des Weiteren werden die jeweiligen Reihen in einer definierten Lage gehalten. Auch die Montage des Sicherungsrings ist dadurch besonders einfach. Durch die erfindungsgemäße Verklinkung, Verzahnung und/oder Versatz der Ringsegmente zueinander werden einzelne Ringsegmente und einzelne Reihen mit anderen Ringsegmenten und anderen Reihen so verbunden, dass die Kraft eines einschlagenden Teils auf eine besonders große Fläche verteilt werden kann. Dadurch ist die Schutzwirkung des Sicherungsrings besonders erhöht. Mehrere Reihen von Ringsegmenten ermöglichen es, in axialer Richtung kleinere Ringsegmente zu verwenden, wodurch die Herstellkosten besonders reduziert sind. Außerdem kann so die axiale Erstreckung des Sicherungsrings besonders einfach, insbesondere modular, erhöht werden, um einen größeren Teilbereich des Gehäuses der Strömungsmaschine vor einem Durchschlagen von abgebrochenen Teilen aus dem Innenraum der Strömungsmaschine zu schützen.

In weiterer vorteilhafter Ausgestaltung der erfindungsgemäßen Schutzeinrichtung ist es vorgesehen, dass die wenigstens zwei Reihen an ihren aneinander in Umfangsrichtung anliegenden Seitenflächen einen zueinander wellenförmigen Verlauf aufweisen. Dies ermöglicht eine besonders gute Selbsthemmung der Rotation der wenigstens zwei Reihen zueinander. Der wellenförmige Verlauf der aneinander anliegenden Seitenflächen führt zudem zu einer besonders gleichmäßigen Kraftübertragung an diese Seitenflächen.

In weiterer vorteilhafter Ausgestaltung der erfindungsgemäßen Schutzeinrichtung ist es vorgesehen, dass die wenigstens zwei Reihen an ihren aneinander in Umfangsrichtung anliegenden Seitenflächen einen zueinander sägezahnförmigen Verlauf aufweisen. Die Ringsegmenten für einen solchen Verlauf der anliegenden Seitenflächen sind besonders kostengünstig zu fertigen.

In weiterer vorteilhafter Ausgestaltung der erfindungsgemäßen Schutzeinrichtung ist es vorgesehen, dass die wenigstens zwei Reihen an ihren aneinander in Umfangsrichtung anliegenden Seitenflächen zueinander korrespondierende Absätze aufweisen. Solche Absätze bewirken eine besonders gute Selbsthemmung bei der Rotation der wenigstens zwei Reihen zueinander und können dabei besonders hohe Kräfte aufnehmen. Außerdem ist ein entsprechender Sicherungsring besonders einfach zu montieren.

In einer weiteren vorteilhaften Ausgestaltung der erfindungsgemäßen Schutzeinrichtung ist es vorgesehen, dass die Ringsegmente an ihren jeweiligen miteinander kontaktierten Seitenflächen und/oder Stirnflächen wenigstens in Teilbereichen zueinander korrespondierende Vertiefungen und/oder Vorsprünge aufweisen. Eine solche formschlüssige Verbindung ist besonders kostengünstig und besonders einfach zu fertigen. Weiterhin ist die Festigkeit eines solchen Formschlusses Absätzen besonders einfach auszulegen.

In einer weiteren vorteilhaften Ausgestaltung der erfindungsgemäßen Schutzeinrichtung ist es vorgesehen, dass der Sicherungsring radial außenseitig von einem Einlaufbelag für einen Leitschaufelring angeordnet ist. Der für die Schutzeinrichtung benötigte Bauraum kann besonders gering sein, wenn der Sicherungsring in einem Freiraum, insbesondere einem Spalt, des Einlaufbelags angeordnet ist. Außerdem kann so ein besonders hartes Material für die Ringsegmente verwendet werden, da dieses Material und die Ringsegmente von den Leitschaufeln durch den Einlaufbelag getrennt ist.

In weiterer vorteilhafter Ausgestaltung der erfindungsgemäßen Schutzeinrichtung ist es vorgesehen, dass die Ringsegmente aus einem Keramikwerkstoff, insbesondere aus einem faserverstärkten Keramikwerkstoff, einem oxidischen Keramikwerkstoff und/oder aus einem Siliciumcarbid, gebildet sind. Siliciumcarbid ist dabei ebenfalls eine Art von Keramikwerkstoff. Ein Keramikwerkstoff kann besonders fest, leicht und temperaturbeständig sein. Damit eignet sich Keramik besonders gut für die Ringsegmente. Außerdem kann Keramik, insbesondere in Abhängigkeit von seiner Porosität, wärmedämmend sein. Damit kann der Sicherungsring auch als Wärmedämmung genutzt werden, welche auch als Wärmedämmpackung bezeichnet wird. Gegebenenfalls kann damit in vorteilhafter Weise auf zusätzliche Elemente zur Wärmedämmung verzichtet werden. Damit wird die Strömungsmaschine besonders kostengünstig und leicht. Außerdem kann Bauraum gespart werden. Ein faserverstärkter Keramikwerkstoff ist dabei besonders durchschlagsfest. Zudem kann die Faserverstärkung dafür sorgen, dass bei Einschlag eines Teils auf ein Ringsegment nicht einzelne Teile von dem Ringsegment abplatzen, welche sonst gegebenenfalls weitere Beschädigungen in der Strömungsmaschine verursachen könnten. Dies ist besonders vorteilhaft, wenn ein Ringsegment durch einen Einschlag lokal verformt wird. Eine oxidische Keramik ist weniger spröde und weist eine höhere Duktilität auf als nicht nicht-oxidische Keramiken, insbesondere weist eine oxidische Keramik eine bessere Wärmedämmung auf. Siliciumcarbid ist besonders hart und besonders resistent gegen sehr hohe Temperaturen.

In weiterer vorteilhafter Ausgestaltung der erfindungsgemäßen Schutzeinrichtung ist es vorgesehen, dass sich jedes Ringsegment 15°, 20°, 25°, 30°, 35°, 40°, 45°, 50°, 55°, 60°, 65°, 70°, 75°, 80°, 85°, 90°, 95°, 100°, 105°, 110°, 115°, oder 120° in Umfangsrichtung erstreckt. Je kleiner dabei die Erstreckung eines Ringsegments ist, desto kostengünstiger ist es zu fertigen. Insbesondere können kleinere Herstellungsmaschinen verwendet werden. Bei größeren Ringsegmenten ist eine geringere Anzahl von Teilen zu montieren, wodurch die Montage besonders einfach wird. Dieser Effekt wird jedoch durch das ansteigende Gewicht eines einzelnen Ringsegments begrenzt. Weiterhin verteilen größere Ringsegmente eine Belastung bei einem Einschlag eines Teils auf eine größere Fläche. Dadurch wird die Schutzwirkung vergrößert. Dieser Vorteil kann jedoch auch bei kleineren Ringsegmenten durch einen entsprechende formschlüssige Verbindung miteinander realisiert werden. Bei größeren Ringsegmenten und damit einer geringeren Anzahl von Ringsegmenten ist es zudem besonders schwer, genügend Spiel zwischen den Ringsegmenten für eine thermische Ausdehnung vorzusehen. Insbesondere kann bei besonders großen Ringsegmenten das notwendige Spiel zwischen zwei Ringsegmenten so groß werden, dass ein Blickspalt entsteht und/oder ein Spalt vorhanden ist, durch den Teile dringen können oder in diesem stecken bleiben können.

Ein besonders guter Kompromiss für die Größe eines einzelnen Ringsegments ist bei Berücksichtigung dieser gegenläufigen Effekte 30°. Die optimale Erstreckung eines Ringsegments in Umfangsrichtung kann auch vorzugsweise für jede Strömungsmaschine empirisch und/oder analytisch bestimmt werden.

In weiterer vorteilhafter Ausgestaltung der erfindungsgemäßen Schutzeinrichtung ist es vorgesehen, dass der Sicherungsring radial zwischen wenigstens einem Schaufelring der Strömungsmaschine und dem Gehäuseelement angeordnet ist. Der Schaufehing kann beispielsweise Teil eines Fans, eines Verdichters und/oder einer Turbine der Strömungsmaschine sein. Durch eine solche Anordnung des Sicherungsrings ist dieser besonders einfach montierbar. Beispielsweise kann der Sicherungsring einfach zwischen das Gehäuseelement und den Schaufelring eingeschoben werden.

Ein zweiter Aspekt der Erfindung betrifft ein Flugtriebwerk mit mindestens einer Schutzeinrichtung, wie sie oben beschrieben wurde. Dadurch ist das Flugtriebwerk besonders kostengünstig und sicher. Die sich aus der Verwendung der Schutzeinrichtung gemäß dem ersten Erfindungsaspekt ergebenden Merkmale und Vorteile sind den Beschreibungen des ersten Erfindungsaspekts zu entnehmen, wobei vorteilhafte Ausgestaltungen des ersten Erfindungsaspekts als vorteilhafte Ausgestaltungen des zweiten Erfindungsaspekts und umgekehrt anzusehen sind.

Weitere Merkmale der Erfindung ergeben sich aus den Ansprüchen, den Ausführungsbeispielen sowie anhand der Zeichnungen. Die vorstehend in der Beschreibung genannten Merkmale und Merkmalskombinationen sowie die nachfolgenden in den Ausführungsbeispielen genannten Merkmale und Merkmalskombinationen sind nicht nur in der jeweils angegebenen Kombination, sondern auch in anderen Kombinationen verwendbar, ohne den Rahmen der Erfindung zu verlassen.

Dabei zeigt:
- Fig. 1: ausschnittsweise eine schematische Schnittansicht der erfindungsgemäßen Schutzeinrichtung für eine Strömungsmaschine mit einem Sicherungsring, bestehend aus einer Vielzahl von Ringsegmenten;
- Fig. 2: in einer schematischen Draufsicht eine Ausgestaltung der Ringsegmente gemäß Fig. 1;
- Fig. 3: in einer schematischen Draufsicht eine alternative Ausgestaltung der Ringsegmente gemäß Fig. 1; und
- Fig. 4: in einer Draufsicht eine weitere alternative Ausgestaltung der Ringsegmente gemäß Fig. 1.

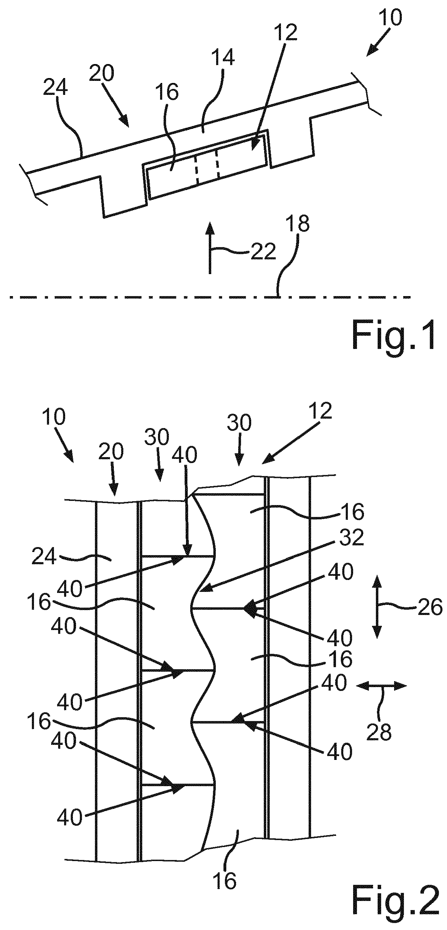

Fig. 1 zeigt ausschnittsweise in einer Schnittansicht eine Schutzeinrichtung 10 für eine Strömungsmaschine. Bei der Strömungsmaschine handelt es sich beispielsweise um eine Gasturbine. Insbesondere kann die Strömungsmaschine Teil eines Flugtriebwerks sein. Die Schutzeinrichtung 10 umfasst einen Sicherungsring 12, welcher radial innenseitig an einem Gehäuseelement 14 der Strömungsmaschine angeordnet ist und welcher ein Durchdringen des Gehäuseelements 14 durch ein Teil eines Bauteils der Strömungsmaschine bei einem strukturellen Versagen dieses Bauteils wenigstens überwiegend verhindert. Dieses strukturelle Versagen und das Verhindern eines Durchdringens des Gehäuseelements 14 werden auch als Containmentfall bezeichnet. In Fig. 1 ist die radiale Richtung durch Pfeil 22 kenntlich gemacht, die axiale Richtung der Strömungsmaschine entspricht ihrer Mittellinie, welche in Fig. 1 mit dem Bezugszeichen 18 versehen ist.

Um sicherzustellen, dass die Ringsegmente 16 auch in einem Zustand, in dem keine Kräfte durch einen Containment-Fall auf sie einwirken, ihre angedachte Position im Sicherungsring 12 nicht verlassen, ist ferner eine Deckelstruktur vorgesehen. Diese Deckelstruktur, welche in Fig. 1 aus Gründen der Übersichtlichkeit nicht dargestellt ist, grenzt radial innen an die Ringsegmente 16 an und verschließt somit den Raum, in den dem die Ringsegmente aufgenommen sind. Bei der Deckelstruktur kann es sich um ein dünnes Blechbauteil handeln. Insbesondere kann es ein so genannter Liner sein, welcher einen Anstreifbelag für die radial äußeren Spitzen von Laufschaufeln aufweisen kann. Im Containment-Fall bewirkt eine solche Deckelstruktur auf vorteilhafte Weise eine gewisse Verteilung der Einschlagkräfte auf die Ringsegmente 16.

Der Sicherungsring 12 zeichnet sich dadurch aus, dass er wenigstens in Umfangsrichtung aus einer Vielzahl von Ringsegmenten 16 besteht, welche formschlüssig miteinander verbunden sind. Der Formschluss ist insbesondere an den aneinander zugewandten Stirnflächen 40 der Ringsegmente 16 ausgebildet. In Fig. 1 ist dabei die Umfangsrichtung im Wesentlichen rechtwinklig zu der Bildebene.

Der aus Ringsegmenten 16 zusammengebaute Sicherungsring 12 erhält seine Containmentfunktion durch einen Formschluss mit einer umfangsartigen Verklinkung. Dabei ist ein Spiel zwischen den Ringsegmenten 16 vorgesehen, welches gerade ausreichend groß ist, dass Thermaldehnungen vom Sicherungsring 12 ausgeglichen werden können. Dieses Spiel ist insbesondere in Umfangsrichtung zwischen den Stirnflächen 40 der Ringsegmente 12 vorgesehen und ist so klein, dass keinesfalls ein Blickspalt entsteht. Durch das Spiel kann zudem auch eine unterschiedliche Wärmeausdehnung von dem Gehäuseelement 14 und dem Sicherungsring 12 ausgeglichen werden. Dies ist bei einem ähnlichen, aber einstückigen und durchgehenden Sicherungsring nicht ohne Weiteres möglich.

Der Sicherungsring 12 beziehungsweise die Ringsegmente 16 bestehen aus einem Keramikwerkstoff. Ein Keramikwerkstoff kann besonders hochfest, temperaturbeständig und wärmedämmend sein. Damit ist es insbesondere möglich, auf eine zusätzliche Wärmedämmpackung zu verzichten, wodurch die Strömungsmaschine besonders leicht sein kann. Gerade die Fertigung besonders großer Keramikwerkstücke kann jedoch sehr teuer sein. Deswegen ist der Sicherungsring 12, welcher aus einer Vielzahl von Ringsegmenten 16 besteht, zudem besonders kostengünstig herstellbar.

Der mehrteilige Sicherungsring 12 kann besonders einfach auch bei hinterschnittenen Gehäusegeometrien montiert werden. Einzelne Ringsegmente 16 können einfach eingeschoben oder eingelegt werden. Insbesondere können die Ringsegmente 16 zwischen einem Einlaufbelag für einen Leitschaufehing und jeweiligen Gehäuseelementen 14 eingeschoben werden. Dies ist bei einem einstückigen Sicherungsring nicht ohne Weiteres möglich. Ein einstückiger Sicherungsring kann bei hinterschnittenen Gehäusegeometrien überhaupt nur mit besonders hohem Aufwand montiert werden.

Durch eine umfangsartige Verklinkung und/oder Verrastung der Ringsegmente 16 miteinander ist es möglich, dem Sicherungsring 12 weitestgehend die Eigenschaften eines geschlossenen Rings zu geben. Dadurch erhält der so aufgebaute Sicherungsring 12 seine volle Containmentfähigkeit. Zudem können die einzelnen Ringsegmente 16 so in Umfangsrichtung Zugkräfte aufnehmen, wie diese bei einem Containmentfall eintreten können. Bei Aufprall eines Fragments bei einem strukturellen Versagen eines Bauteils der Strömungsmaschine hält der aus Ringsegmenten 16 gekoppelte Sicherungsring 12 diese Fragmente zurück und verhindert das örtliche scharfe Eindringen von Fragmentkörperkanten in das Gehäuseelement 14.

Diese Containmentfähigkeit des Sicherungsrings 12 kann durch eine Spanneinrichtung 20 nochmals verstärkt werden. Die Spanneinrichtung 20 kann zu diesem Zweck beispielsweise einen Stator 24 mit Umfangsstegen umfassen. Der Stator 24 liegt axial an dem Sicherungsring 12 an und verspannt diesen axial gegen das Gehäuseelement 14. Dadurch sind die Ringsegmente 16 in der Tangentialebene radial bewegungsbehindert. Alternativ oder zusätzlich können auch das Gehäuseelement 14 und/oder andere Bauteile als Elemente der Spanneinrichtung 20 vorgesehen werden. Die Spanneinrichtung 20 spannt die Ringsegmente 16 axial ein. Dadurch entsteht eine erhebliche Wandreibung. Durch die resultierende Kraftumlenkung werden auch die Zugkräfte in den Ringsegmenten 16 kleiner als in einem äquivalenten einstückigen Sicherungsring.

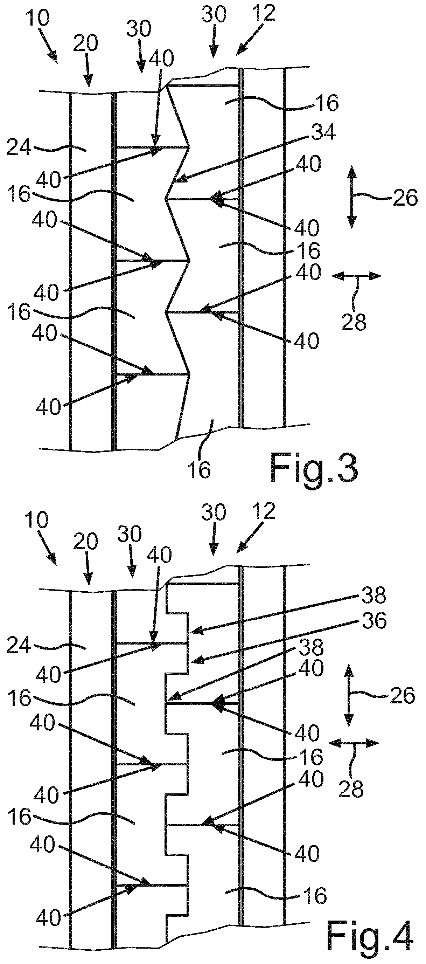

Insbesondere kann die Spanneinrichtung 20 zur Containmentfähigkeit des Sicherungsrings 12 dadurch beitragen, dass sie eine Axialverschiebung einzelner Ringsegmente 16 im Containment-Fall verhindert oder zumindest stark begrenzt. Im Containment-Fall wirken nämlich von dem aufschlagenden Bauteil auf den Sicherungsring 12 Kräfte radial nach außen. Da die einzelnen Ringsegmente 16 des Sicherungsrings 12, wie zuvor beschrieben, durch ihre formschlüssige Verbindung ähnlich einem geschlossenen Ring wirken, gerät der Sicherungsring 12 unter Zugspannung. Bei Ausführungsformen, wie sie zum Beispiel in den Fig. 2 und 3 dargestellt sind, können zwei oder ggf. auch mehr Reihen von Ringsegmenten 16 in Axialrichtung nebeneinander angeordnet sein und dabei zueinander durch Formschluss so verbunden sein, dass die Reihen, wenn der Sicherungsring 12 unter Zugkraft gerät, axial auseinander gedrückt werden. Dieser axialen Bewegung wird jedoch durch die Spanneinrichtung 20 entgegengengewirkt, da diese den Freiraum für die Ringsegmente 16 in axialer Richtung stark begrenzt. Somit verkeilen sich die Ringsegmente im Containment-Fall zwischen den Wandungen der Spanneinrichtung 20, was die Containmentfähigkeit der Schutzeimichtung 10 weiter erhöht. Mit anderen Worten kann ein Teil der Aufschlagkraft im Containment-Fall durch die Ringsegmente 16 in Axialrichtung umgelenkt und von der Spanneinrichtung 20 aufgefangen werden.

Die Fig. 2 bis 4 zeigen in einer ausschnittsweisen radialen Draufsicht von innen mögliche Ausgestaltungen der Ringsegmente 16 beziehungsweise des Sicherungsrings 12. Die radiale Richtung entspricht dabei einer Richtung senkrecht zur Bildebene der Fig. 2 bis 4. Die Umfangsrichtung ist in den Fig. 2 bis 4 durch den Pfeil 26 kenntlich gemacht. Die axiale Richtung ist entsprechend durch Pfeil 28 kenntlich gemacht. In jedem der Ausführungsbeispiele umfasst der Sicherungsring 12 zwei Reihen 30 von Ringsegmenten 16, wobei eine Rotation der zwei Reihen 30 zueinander durch eine umfangsartige Verklinkung, Verzahnung und/oder Versatz der jeweiligen Ringsegmente 16 verhindert ist. Durch eine solche Bauweise kann der Sicherungsring 12 besonders kostengünstig sein. Die axiale Ausdehnung des Sicherungsrings 12 kann so nämlich variiert werden, ohne dass größere Ringsegmente 16 gefertigt werden müssen. Die Selbsthemmung der Rotation der zwei Reihen 30 zueinander verstärkt dabei die Schutzwirkung des Sicherungsrings 12, sodass sie weitestgehend der eines einstückigen Sicherungsrings entspricht.

In Fig. 2 sind die zwei Reihen 30 an ihren aneinander in Umfangsrichtung anliegenden Seitenflächen 32 durch einen wellenförmigen Verlauf miteinander verklinkt und/oder verzahnt. Der wellenförmige Verlauf der Seitenflächen 32 sorgt für eine möglichst gleichmäßige Kraftübertragung an diesen Seitenflächen 32. Dadurch werden Lastspitzen in den Ringsegmenten 16 und/oder an deren Seitenflächen 32 vermieden.

Bei der in Fig. 3 gezeigten Ausgestaltungsform weisen die zwei Reihen 30 an ihren aneinander in Umfangsrichtung anliegenden Seitenflächen 34 einen zueinander sägezahnförmigen Verlauf auf. Der Vorteil dieser Ausgestaltungsform sind die besonders kostengünstig zu fertigenden Ringsegmente 16.

Bei der Ausgestaltungsform gemäß Fig. 4 weisen die wenigstens zwei Reihen 30 an ihren aneinander in Umfangsrichtung anliegenden Seitenflächen 36 zueinander korrespondierende Absätze 38 auf. Dies bewirkt eine besonders gute Selbsthemmung. Außerdem ist der Sicherungsring 12 so besonders einfach zu montieren, da die Ringsegmente 16 bereits bei einer Teilmontage des Sicherungsrings 12 bereits sehr gut in ihrer Position fixiert sind.

Auch zwischen den aneinander anliegenden Seitenflächen 32, 34, 36 der zwei Reihen 30 kann ein axiales Spiel ähnlich dem Spiel in Umfangsrichtung zwischen den Stirnflächen 40 der Ringsegmente 12 vorgesehen sein. Durch dieses Spiel kann eine unterschiedliche Wärmeausdehnung von dem Gehäuseelement 14, dem Sicherungsring 12, der Reihen 30 und/oder weiterer Elemente der Strömungsmaschine ausgeglichen werden, insbesondere in axialer Richtung.

Besonders vorteilhaft ist es, die erfindungsgemäße Schutzeinrichtung 10 bei einem Flugtriebwerk zu verwenden. Gerade bei einem Versagen des Containments eines Flugtriebwerks kann es zu erheblichen Sicherheitsrisiken kommen. Mit der Schutzeinrichtung 10 kann ein solches Containment besonders kostengünstig zur Verfügung gestellt werden.

### Bezugszeichenliste

- 10: Schutzeinrichtung
- 12: Sicherungsring
- 14: Gehäuseelement
- 16: Ringsegment
- 18: Mittelachse
- 20: Spanneinrichtung
- 22: Pfeil
- 24: Stator
- 26: Pfeil
- 28: Pfeil
- 30: Reihe
- 32: Seitenfläche
- 34: Seitenfläche
- 36: Seitenfläche
- 38: Absatz
- 40: Stirnfläche

## Patentansprüche

1. Schutzeinrichtung (10) für eine Strömungsmaschine, insbesondere eine Gasturbine, mit einem Sicherungsring (12), welcher radial innenseitig an einem Gehäuseelement (14) der Strömungsmaschine angeordnet ist und welcher ein Durchdringen des Gehäuseelements (14) durch ein Teil eines Bauteils der Strömungsmaschine bei einem strukturellen Versagen dieses Bauteils wenigstens überwiegend verhindert,
**dadurch gekennzeichnet, dass**
der Sicherungsring (12) wenigstens in Umfangsrichtung aus einer Vielzahl von Ringsegmenten (16) besteht, welche formschlüssig miteinander verbunden sind.

2. Schutzeinrichtung (10) nach Anspruch 1,
**dadurch gekennzeichnet, dass**
zwischen den einzelnen Ringsegmenten (16) in Umfangsrichtung ein Spiel vorgesehen ist, um infolge von thermischen Belastungen hervorgerufene Ausdehnungen der Ringsegmente (16) ausgleichen zu können.

3. Schutzeinrichtung (10) nach einem der Ansprüche 1 oder 2,
**dadurch gekennzeichnet, dass**
die Ringsegmente (16) formschlüssig durch eine Verklinkung und/oder eine Verzahnung miteinander verbunden sind.

4. Schutzeinrichtung (10) nach einem der vorhergehenden Ansprüche,
**dadurch gekennzeichnet, dass**
der Sicherungsring (12) mittels einer Spanneinrichtung (20) in axialer Richtung eingespannt ist.

5. Schutzeinrichtung (10) nach Anspruch 4,
**dadurch gekennzeichnet, dass**
die Spanneinrichtung (20) wenigstens einen Stator (24), insbesondere einen Schaufelfuß einer Leitschaufel, einen Gehäusevorsprung, einen Haken, und/oder ein Leitblech umfasst, welcher wenigstens teilweise axial an dem Sicherungsring (12) anliegt.

6. Schutzeinrichtung (10) nach einem der vorhergehenden Ansprüche,
**dadurch gekennzeichnet, dass**
der Sicherungsring (12) wenigstens zwei Reihen (30) von Ringsegmenten (16) aufweist, wobei zumindest die in axialer Richtung aneinandergrenzenden Seitenflächen der Ringsegmente durch eine Verklinkung, Verzahnung und/oder einen Versatz in Umfangsrichtung miteinander verbunden sind.

7. Schutzeinrichtung (10) nach einem Anspruch 6,
**dadurch gekennzeichnet, dass**
die wenigstens zwei Reihen (30) an ihren aneinander in Umfangsrichtung anliegenden Seitenflächen (32) einen zueinander wellenförmigen Verlauf aufweisen.

8. Schutzeinrichtung (10) nach einem Anspruch 6,
**dadurch gekennzeichnet, dass**
die wenigstens zwei Reihen (30) an ihren aneinander in Umfangsrichtung anliegenden Seitenflächen (34) einen zueinander sägezahnförmigen Verlauf aufweisen.

9. Schutzeinrichtung (10) nach einem Anspruch 6,
**dadurch gekennzeichnet, dass**
die wenigstens zwei Reihen (30) an ihren aneinander in Umfangsrichtung anliegenden Seitenflächen (36) zueinander korrespondierende Absätze (38) aufweisen.

10. Schutzeinrichtung (10) nach einem der vorhergehenden Ansprüche,
**dadurch gekennzeichnet, dass**
die Ringsegmente (16) an ihren jeweiligen miteinander kontaktierten Seitenflächen (32, 34, 36) und/oder Stirnflächen (40) wenigstens in Teilbereichen zueinander korrespondierende Vertiefungen und/oder Vorsprünge aufweisen.

11. Schutzeinrichtung (10) nach einem der vorhergehenden Ansprüche,
**dadurch gekennzeichnet, dass**
der Sicherungsring (12) radial außenseitig von einem Einlaufbelag für einen Leitschaufehing angeordnet ist.

12. Schutzeinrichtung (10) nach einem der vorhergehenden Ansprüche,
**dadurch gekennzeichnet, dass**
die Ringsegmente (16) aus einem Keramikwerkstoff, insbesondere aus einem faserverstärkten Keramikwerkstoff, einem oxidischen Keramikwerkstoff und/oder aus einem Siliciumcarbid, gebildet sind.

13. Schutzeinrichtung (10) nach einem der vorhergehenden Ansprüche,
**dadurch gekennzeichnet, dass**
sich jedes Ringsegment (16) 30° in Umfangsrichtung erstreckt.

14. Schutzeinrichtung (10) nach einem der vorhergehenden Ansprüche,
**dadurch gekennzeichnet, dass**
der Sicherungsring (12) radial zwischen wenigstens einem Schaufelring der Strömungsmaschine und dem Gehäuseelement (14) angeordnet ist.

15. Flugtriebwerk mit mindestens einer Schutzeinrichtung (10) nach einem der vorhergehenden Ansprüche.
